# EUROPÄISCHE PATENTANMELDUNG

(11) **EP 2 574 245 A2**
(43) Veröffentlichungstag der Anmeldung: **03.04.2013**
(21) Anmeldenummer: 12183058.2
(22) Anmeldetag: 05.09.2012
(51) Int. Cl.: A24C 5/34, G01N 1/28, B30B 15/00

(54) **Vorrichtung zum Zerdrücken von Kapseln in Rauchartikeln**

(30) Priorität: 29.09.2011 DE 202011106490 U
(71) Anmelder: British American Tobacco (Germany) GmbH, 20354 Hamburg (DE)
(72) Erfinder: Pietsch, Norbert, 91257 Pegnitz (DE)
(74) Vertreter: Schwabe - Sandmair - Marx

(57) **Zusammenfassung**

Die Erfindung betrifft Vorrichtung zum Zerdrücken von Kapseln in Rauchartikeln, mit zumindest einer Anlage (1a, 1b, 1c) zur Positionierung eines Rauchartikels und einem bis auf eine vorbestimmbare Distanz an eine Anlage (1c) annäherbaren Stößel (2).

## Beschreibung

Die vorliegende Erfindung betrifft eine Vorrichtung zum Zerdrücken von Kapseln, die sich in Rauchartikeln, insbesondere in Zigarettenfiltern befinden.

Neben Zigaretten mit herkömmlichen Filtern gibt es Zigaretten, in deren Filter sich zumindest eine Kapsel befindet, die beispielsweise mit einem Flavourstoff gefüllt ist. Um den Flavourstoff freizugeben und den Rauchartikel somit zu aromatisieren, wird die Kapsel durch den Konsumenten zerdrückt, was eine Abgabe des Flavourstoffes in den Zigarettenfilter bewirkt.

Zur Ermittlung von Rauchwerten wie Kondensat, Nikotin und Kohlenmonoxid werden Zigaretten im Labor durch Rauchmaschinen kontrolliert abgeraucht. Bei Zigaretten, deren Filter Kapseln enthalten, müssen diese vor dem Abrauchen durch die Rauchmaschine zerstört werden. Da Zigaretten entsprechend der relevanten Normen in großen Mengen abgeraucht werden, führt das manuelle Zerstören der Kapseln mittels Daumen und Zeigefinger zu einer erheblichen Belastung des Laborpersonals und ist darüber hinaus zeitaufwändig. Ein weiterer Nachteil besteht darin, dass die Kapseln unter Umständen nicht reproduzierbar zerstört werden.

Es ist die Aufgabe der vorliegenden Erfindung, eine Vorrichtung bereitzustellen, die ein einfaches und reproduzierbares Zerdrücken von in Rauchartikeln befindlichen Kapseln ermöglicht.

Diese Aufgabe wird durch den Gegenstand des Schutzanspruchs 1 gelöst. Die abhängigen Ansprüche definieren dabei bevorzugte Ausführungsformen der vorliegenden Erfindung.

Die erfindungsgemäße Vorrichtung umfasst zumindest eine Anlage zur Positionierung eines Rauchartikels und einen bis auf eine vorbestimmte Distanz an eine Anlage annäherbaren Stößel. Mit anderen Worten umfasst die erfindungsgemäße Vorrichtung eine oder mehrere Anlagen, an oder auf welche ein Rauchartikel an- oder aufgelegt werden kann, um anschließend eine im Rauchartikel befindliche Kapsel zu zerstören bzw. zu zerdrücken. Die erfindungsgemäße Vorrichtung umfasst ferner einen Stößel, der relativ zu zumindest einer An- oder Auflage beweglich ist, so dass der Abstand zwischen dem Stößel und zumindest einer Anlage soweit verringert werden kann, dass eine im Rauchartikel befindliche Kapsel zwischen dem Stößel und zumindest einer Anlage zerdrückt wird. Hierzu weisen der Stößel und zumindest eine Anlage Wirkflächen auf, die zum Zerdrücken der Kapsel auf diese einwirken. Der Stößel muss also bis auf eine Distanz an zumindest eine Anlage annäherbar sein, die geringer ist als die Erstreckung einer zu zerdrückenden Kapsel. Es ist dabei wünschenswert, dass die Distanz, bis auf welche der Stößel an eine Anlage annäherbar ist, vom Benutzer variiert werden kann, so dass gegebenenfalls verschiedenartige Kapseln mit der erfindungsgemäßen Vorrichtung zerdrückt werden können. Eine Variable vorbestimmbare Distanz hat einen weiteren Vorteil für das reproduzierbare Zerdrücken von Kapseln. So kann ein Benutzer den Stößel bei einem positionierten Rauchartikel so weit an eine Anlage annähern, bis die Kapsel im Rauchartikel zerbricht, wobei diese Distanz für die folgenden Durchgänge als minimale Distanz zwischen Stößel und Anlage fixiert wird. Auf diese Weise wird sichergestellt, dass die Kapseln aller weiteren positionierten Rauchartikel gleichartig zerdrückt werden.

Gemäß einer bevorzugten Ausführungsform der vorliegenden Erfindung ist die Stößelbewegung eine translatorische, wobei grundsätzlich auch eine rotatorische oder eine überlagert rotatorisch-translatorische Bewegung des Stößels bei der Annäherung an eine Anlage denkbar ist. Ferner wird eine Bewegung des Stößels quer zur Längsachse eines in der Vorrichtung positionierten Rauchartikels bevorzugt, wobei eine senkrecht zur Längsachse verlaufende Bewegung besonders bevorzugt wird.

Gemäß einer weiter bevorzugten Ausführungsform der vorliegenden Erfindung begrenzt ein Anschlag die Annäherung des Stößels an die Anlage. Wie weiter oben schon ausgeführt, weist eine vorbestimmbare und variable minimale Distanz zwischen Stößel und Anlage Vorteile für das reproduzierbare Zerdrücken einer Vielzahl von in Rauchartikeln befindlichen Kapseln auf, die nacheinander in die Vorrichtung eingelegt werden. Um den Stößel immer gleich weit an die Anlage anzunähern, kann ein Anschlag vorgesehen werden, der eine weitere Bewegung des Stößels über eine vorbestimmte minimale Distanz hinaus zur Anlage hin verhindert. Um eine Veränderung der minimalen Distanz zwischen Stößel und Anlage zu ermöglichen, muss der Anschlag in Bezug auf die minimale Distanz verstellbar ausgestaltet sein.

Für die Betätigung durch einen Benutzer oder eine automatische Einrichtung kann der Stößel bzw. der Stößelkörper selbst eine Wirkfläche aufweisen, über welche die Bewegung des Stößels bewirkt wird. Es ist jedoch ebenso vorstellbar, dass zwischen Stößel und Benutzer bzw. einer automatischen Einrichtung weitere Koppelglieder geschaltet sind, so dass eine Bewegung des Stößels mittelbar über zumindest ein Koppelglied, welches beispielsweise ein Hebel, eine Stange oder eine Welle sein kann, vom Benutzer oder einer automatischen Einrichtung bewirkt wird.

Besonders bevorzugt weist die erfindungsgemäße Vorrichtung mehrere Anlagen auf, die den Rauchartikel in einer vordefinierten Position halten. Besonders bevorzugt wird eine Vorrichtung, die so viele Anlagen aufweist, dass eine Bewegung des Rauchartikels in der Vorrichtung verhindert wird, selbst wenn der Stößel mechanisch unter Ausübung von Kräften auf den Rauchartikel bzw. die im Rauchartikel befindliche Kapsel einwirkt. Grundsätzlich können ein oder mehrere Anlagen aus planen oder gekrümmten Flächen, aus Kanten oder punktförmig zusammenlaufenden und am Rauchartikel anliegenden Fortsätzen gebildet werden, so dass zwischen dem positionierten Rauchartikel und den Anlagen letztendlich flächiger, linienförmiger und/oder punktförmiger Kontakt besteht.

Um die Position von in der Vorrichtung positionierten Rauchartikeln zu variieren oder Rauchartikel unterschiedlicher Abmessungen zu positionieren, ist es von besonderem Vorteil, wenn zumindest eine Anlage relativ zu der oder den Anlagen positionell variiert wird und insbesondere fixiert werden kann. Da die zu zerdrückenden Kapseln in Rauchartikeln verschiedenartig positioniert sein können, ist es weiterhin von Vorteil wenn der Stößel quer zu seiner Bewegungsrichtung und relativ zu zumindest einer Anlage und dem positionierten Rauchartikel variiert und insbesondere fixiert werden kann. Auf diese Weise ist es möglich, die erfindungsgemäße Vorrichtung individuell an den Rauchartikeltyp anzupassen.

Grundsätzlich ist es vorstellbar, dass die erfindungsgemäße Vorrichtung mehrere Stößel aufweist, die insbesondere unabhängig voneinander bis zu einer vorbestimmten Distanz an korrespondierende Anlagen annäherbar sind, um mehrere Kapseln eines Rauchartikels zu zerdrücken. Vorteilhafterweise ist die Position der Stößel relativ zueinander und zu den Anlagen variierbar und insbesondere fixierbar. Auch wäre eine Koppelung der Stößel bzw. der Stößelbewegungen vorstellbar, um ein gleichzeitiges Zerdrücken von mehreren Kapseln zu bewirken.

Eine weiter bevorzugte Ausführungsform der vorliegenden Erfindung weist eine Rückholeinrichtung auf, die den Stößel in einer Ausgangsposition hält und entgegen der Annäherungsbewegung wirkt.

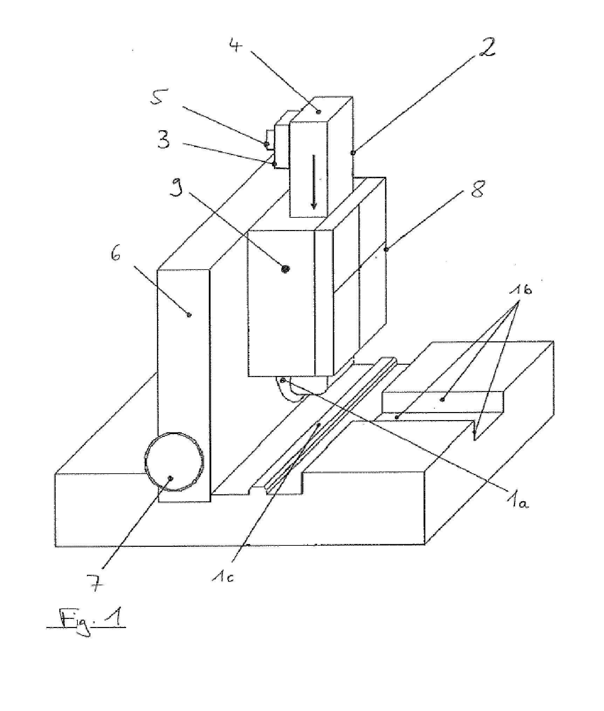

Im Folgenden wird eine bevorzugte Ausführungsform der vorliegenden Erfindung anhand der beiliegenden Figur 1 näher beschrieben. Die Erfindung kann sämtliche hierin beschriebenen Merkmale einzeln sowie in jedweder sinnvollen Kombination umfassen.

Die Vorrichtung umfasst eine nicht bezeichnete Grundplatte, in die eine durch drei Anlageflächen 1b gebildete Nut eingearbeitet ist. Der in der Vorrichtung zu positionierende zylinderförmige Rauchartikel wird in die Nut eingelegt und liegt mit seiner Mantelfläche zumindest an zwei der Anlageflächen 1b linienförmig auf, wobei ein Stirnende des Rauchartikels an der Anlagefläche 1a flächenhaft anliegt. Die im Rauchartikel bzw. im Rauchartikelfilter befindliche und zu zerdrückende Kapsel befindet sich nun zwischen der durch einen vorspringenden Steg gebildeten Anlagefläche 1 c und dem unteren Ende des Stößels 2.

Um die Vorrichtung gezielt auf die Position der im Rauchartikel bzw. Rauchartikelfilter befindlichen Kapsel einzustellen, kann die Anlagefläche 1a zusammen mit der Trägerplatte 6 mittels der Justiereinrichtung 7 zur Anlagefläche 1 c hin oder von dieser weg positioniert werden. Es ist dabei ferner grundsätzlich möglich, die Position des Stößels 2 relativ zur Anlagefläche 1a zu variieren, so dass der Stößel 2 wieder über der Anlagefläche 1c zu liegen kommt, oder aber es kann ein Stößel vorgesehen werden, dessen untere Wirkfläche so groß ausgestaltet ist, dass sich ein Teil dieser Wirkfläche immer über der Anlagefläche 1c befindet, egal wie die Trägerplatte 6 zusammen mit der Anlagefläche 1a positioniert wird. Die Position der Trägerplatte 6 zusammen mit der Anlagefläche 1a kann ferner mittels der Verstelleinrichtung 7, die eine Klemmschraube sein kann, oder eine gesonderte Fixiereinrichtung festgestellt werden.

An der Trägerplatte 6 ist ein Führungsblock 9 mit einer Deckplatte 8 befestigt, die den Stößel 2 umgreifen und bei seiner Bewegung auf den Rauchartikel zu in Richtung des in der Figur 1 zu sehenden Pfeiles führen. Im Führungsblock 9 ist eine nicht gezeigte Rückholfeder untergebracht, die den Stößel 2 in einer oberen Position hält und hierbei entgegen der Betätigungskraft wirkt.

Am Stößel 2 ist ein exzentrischer Tiefenanschlag 3 angeordnet, der mittels einer Feststellschraube 5 angebracht ist. Der Tiefenanschlag 3 dient dem reproduzierbaren Zerdrücken der Kapsel. Dabei wird der Tiefenanschlag 3 mit Hilfe der Feststellschraube 5 gelöst, woraufhin der Stößel durch Drücken auf die Wirkfläche 4 so weit nach unten und der Anlagefläche 1 c entgegen gedrückt wird, bis die Kapsel im Rauchartikel hör- und fühlbar zerbricht. Der Stößel 2 wird vom Benutzer in dieser Position gehalten und der Tiefenanschlag 3 mittels der Schraube 5 fixiert. Damit besteht die Möglichkeit, die Kapseln aller folgenden in die Vorrichtung eingelegten Rauchartikel unter gleich bleibenden Bedingungen und in großer Zahl zu zerstören.

Wie bereits oben beschrieben, kann ein Benutzer oder eine beispielsweise elektrisch oder pneumatisch betriebene automatische Einrichtung direkt auf die Wirkfläche 4 des Stößels 2 einwirken, oder aber mittelbar über Koppelglieder wie beispielsweise Hebel, Stangen oder Wellen.

## Patentansprüche

1. Vorrichtung zum Zerdrücken von Kapseln in Rauchartikeln, mit zumindest einer Anlage (1 a, 1 b, 1 c) zur Positionierung eines Rauchartikels und einem bis auf eine vorbestimmbare Distanz an eine Anlage (1c) annäherbaren Stößel (2).

2. Vorrichtung gemäß Schutzanspruch 1, wobei die Bewegung des Stößels (2) eine translatorische ist und/oder der Stößel (2) quer, insbesondere senkrecht zur Längsachse eines in der Vorrichtung positionierten Rauchartikels bewegbar ist.

3. Vorrichtung gemäß Schutzanspruch 1 oder 2, mit ferner einem Anschlag (3), der die Annäherung des Stößels (2) an die Anlage (1 c) vorbestimmbar begrenzt.

4. Vorrichtung gemäß einem der Schutzansprüche 1 bis 3, wobei der Stößel (2) unmittelbar oder mittelbar eine Wirkfläche (4) für einen den Stößel (2) betätigenden Benutzer oder eine den Stößel (2) betätigende Einrichtung aufweist.

5. Vorrichtung gemäß einem der Schutzansprüche 1 bis 4, mit mehreren Anlagen (1a, 1b, 1c), die den Rauchartikel in einer vordefinierten Position halten.

6. Vorrichtung gemäß Schutzanspruch 5, wobei zumindest eine Anlage (1a, 1b, 1c) relativ zu der oder den anderen Anlage(n) (1a, 1b, 1c) positionell variiert und insbesondere fixiert werden kann.

7. Vorrichtung gemäß einem der Schutzansprüche 1 bis 6, wobei die Position des Stößels (2) quer zu seiner Bewegungsrichtung und relativ zu zumindest einer Anlage (1a, 1b, 1c) und dem positionierten Rauchartikel variiert und insbesondere fixiert werden kann.

8. Vorrichtung gemäß einem der Schutzansprüche 1 bis 7, mit einer den Stößel (2) in einer Ausgangsposition haltenden und entgegen der Annäherungsbewegung wirkenden Rückholeinrichtung.
